# FASCICULE DE BREVET EUROPEEN

(11) **EP 1 172 948 B1**
(45) Date de publication et mention de la délivrance du brevet: **05.10.2011**
(21) Numéro de dépôt: 01401551.5
(22) Date de dépôt: 14.06.2001
(51) Int. Cl.: H04B 7/185

(54) **Dispositif gestionnaire de ressources pour un système de télécommunication par satellite**
Verwaltungsmittelvorrichtung für ein Satelliten-Übertragungssystem
Resource administrator device for a satellite telecommunication system

(30) Priorité: 13.07.2000 FR 0009198
(43) Date de publication de la demande: 16.01.2002
(73) Titulaire: Thales, 92 Neuilly sur Seine (FR)
(72) Inventeur: Baudoin, Cédric, 31400 Toulouse (FR); Bignebat, Laurence, 31830 Plaisance du Touch (FR); Combes, Stéphane, 31400 Toulouse (FR); Parmentier, Pierre, 91400 Saclay (FR); Roullet, Laurent, 31500 Toulouse (FR); Zein Al-Abedeen, Tarif, 31320 Castanet (FR)
(74) Mandataire: Esselin, Sophie

(56) Documents cités:
- EP-A- 0 453 355
- BAIOCCHI A ET AL: "DEFINITION AND PERFORMANCE ANALYSIS OF A SIMPLE, ABR-LIKE CONGESTION CONTROL SCHEME FOR SATELLITE ATM NETWORKS WITH GUARANTEED LOSS PERFORMANCE" IEEE JOURNAL ON SELECTED AREAS IN COMMUNICATIONS,IEEE INC. NEW YORK,US, vol. 17, no. 2, février 1999 (1999-02), pages 303-313, XP000851763 ISSN: 0733-8716
- SUN Z ET AL: "ATM-over-satellite demonstration of broadband network interconnection" COMPUTER COMMUNICATIONS,GB,BUTTERWORTHS & CO. PUBLISHERS LTD, vol. 21, no. 12, 25 août 1998 (1998-08-25), pages 1090-1101, XP004146570 ISSN: 0140-3664

## Description

L'invention concerne un dispositif gestionnaire de ressources pour un système de télécommunication par satellite, et notamment un système où des données sont transmises par paquets, et sont commutées par un commutateur de paquets embarqué à bord d'un satellite. Ce satellite peut-être géostationnaire ou non. Ces paquets peuvent être des cellules à mode de transfert asynchrone (ATM, Asynchronous Transfer Mode), mais ce dispositif peut être adapté pour tout type de paquet à longueur fixe ou variable.

Un tel système de télécommunication comporte une pluralité de stations terrestres dites utilisatrices qui communiquent entre elles via au moins un satellite. Elles sont en concurrence pour utiliser les ressources de ce satellite. Pour chaque satellite, un tel système comporte un dispositif gestionnaire pour gérer les ressources du satellite : la bande passante de chaque lien radio montant, la bande passante de chaque lien radio descendant, et les ressources du commutateur embarqué.

Le commutateur embarqué distribue les paquets de données qui arrivent sur une pluralité de liens montants, vers une pluralité de liens descendants, en fonction de données de routage. Un tel système de télécommunication comporte des moyens pour allouer les ressources en temps et en fréquence des liens montants (des stations utilisatrices vers le satellite). Mais cela ne suffit pas : Sur chacune de ses sorties, le commutateur réalise un multiplexage statistique. Les paquets de données n'ont généralement pas un débit constant, mais sont plutôt transmis en rafales. Lorsque beaucoup de paquets ont pour destination la même sortie au même moment (c'est à dire doivent être supportés par un même lien descendant du satellite vers une, ou plusieurs, station utilisatrice), il en résulte un conflit. Ce conflit est résolu au moyen d'une mémoire tampon, généralement une mémoire tampon par sortie. Mais cette mémoire tampon a une capacité limitée. La congestion d'une mémoire tampon provoque la perte de paquet de données.

Pour éviter au maximum les pertes de paquets, un tel système comporte un dispositif de contrôle de congestion qui agit sur la station utilisatrice émettant les paquets, pour ralentir l'afflux des paquets dynamiquement en cours de transmission. D'autre part, un tel système comporte un dispositif d'admission des connexions, qui accepte l'établissement d'une nouvelle connexion seulement si les ressources disponibles, à l'instant considéré, sont suffisantes. L'ensemble de ces dispositifs constitue un dispositif gestionnaire de ressources pour un satellite. Cet ensemble de dispositifs peut être situé au sol, ou bien être partagé entre le sol et le satellite.

Un tel dispositif gestionnaire de ressources doit satisfaire les contraintes suivantes :
- Optimiser l'utilisation des ressources radio, aussi bien celles des liens montants que celles des liens descendants.
- Garantir un taux de perte acceptable dans le commutateur embarqué, surtout dans le cas où celui-ci ne possède qu'une faible capacité de mémoire tampon.
- Limiter la complexité des éléments de commande du commutateur embarqué.
- Offrir un maximum de flexibilité et de reconfigurabilité.
- Pouvoir supporter un spectre de types de trafic, très large et évolutif.
- Pouvoir offrir et garantir différentes qualités de service.
- Rester cohérent avec les principes et les normes relatifs à la couche ATM, le protocole de gestion de ressources se situant dans la couche d'accès au médium (MAC, Medium Access Control) qui est située entre la couche ATM et la couche physique.

Pour optimiser l'utilisation des ressources radio d'un satellite **sans** commutateur embarqué, il est connu de mettre en oeuvre, dans le dispositif gestionnaire de ressources, un protocole d'allocation dynamique de ressources à la demande, appelé DAMA (Demand Assignement Multiple Access), en mode paquets. En collaboration avec un dispositif d'admission de connexions, appelé CAC (Connection Admission Control), un contrôleur DAMA alloue respectivement aux stations utilisatrices des fréquences et des intervalles temporels sur un lien montant (et le lien descendant qui lui est associé), en fonction de demandes exprimées explicitement ou implicitement par ces stations. Les requêtes de toutes les stations utilisant un satellite donné sont envoyées au contrôleur DAMA gestionnaire des ressources de ce satellites, et elles sont servies selon une discipline du type premier-arrivé-premier-servi. On connaît plusieurs protocoles DAMA qui différent par les algorithmes utilisés pour réaliser l'allocation à la demande.

Par exemple, le document « Quality-of-service-oriented protocols for resource management in packet switched satellite », EMS Technologies, 4th Ka band utilization conference, 1998, décrit un protocole de type DAMA, appelé CFDAMA (Combined Free and Demand Assignment Multiple Acess). Celui-ci gère les ressources en les scindant en quatre parts :
- Une part réservée (allouée constamment) qui ne nécessite pas de requête et qui est utilisée pour tous les types de trafic à débit constant, ou ne pouvant pas supporter le temps de latence dû à l'allocation dynamique (trafics dits à débit constant (CBR, Constant Bit Rate) ou à débit variable et en temps réel (VBRrt, Variable Bit Rate real time).
- Une part dynamique allouée en débit (dite RBDC - Rate-Based Dynamic Capacity) qui fonctionne sur un principe de requête/allocation, les requêtes étant exprimées en débit.
- Une part dynamique allouée en volume (dite VBDC - Volume-Based Dynamic Capacity) qui fonctionne sur un principe de requête/allocation, les requêtes étant exprimées en volume.
- Une part libre qui est la capacité restante après l'allocation des capacités précédentes.
Ces trois derniers mécanismes peuvent s'appliquer à des trafics non temps réel tolérant des délais plus importants que dans le premier cas.

Pour un satellite comportant un commutateur de paquets, il ne suffit pas de gérer les ressources des liens montants et descendants, il est nécessaire en outre d'adapter le protocole d'accès pour réaliser un contrôle de congestion, sous peine de devoir augmenter la capacité de mémoire tampon ou d'accepter un taux de perte de paquets élevé dû à la congestion dans les mémoires tampons du commutateur embarqué.

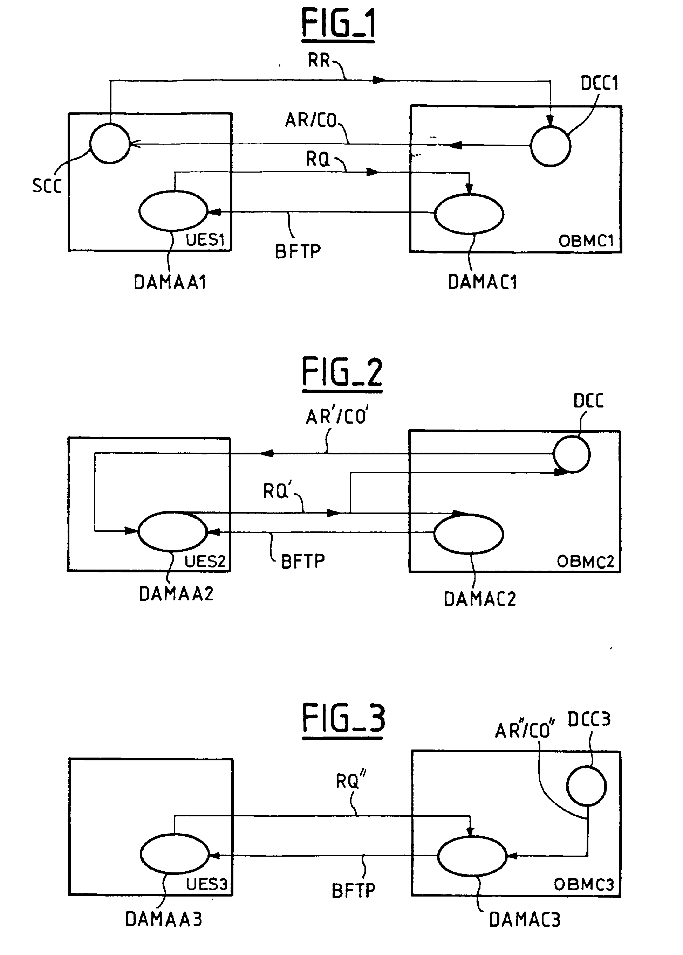

Un premier dispositif gestionnaire connu, représenté par la **figure 1**, réalise un contrôle de congestion indépendant du protocole d'allocation de ressources. Ce dispositif connu comporte une entité centrale, référencée OBMC1, qui regroupe un contrôleur d'allocation de ressources, de type DAMA, référencé DAMAC1 ; et un premier sous-ensemble du contrôleur de congestion référencé DCC1. Ces contrôleurs sont situés à bord du satellite mais ils pourraient aussi être regroupés avec le contrôleur d'admission de connexions, dans une station centrale au sol.

Dans le dispositif représenté sur la figure 1, la station utilisatrice UES1 comporte un agent DAMA, référencé DAMAA1, et un second sous-ensemble SCC du contrôleur de congestion.

Sachant qu'il a besoin d'un débit donné, le sous-ensemble SCC envoie au sous-ensemble DCC1 du contrôleur de congestion, une requête RR indiquant ce débit requis. Le sous-ensemble DCC1 lui répond en lui indiquant un débit autorisé AR, ou un refus CO lorsqu'il y a effectivement une congestion de la mémoire tampon pour la sortie visée. De manière indépendante, l'agent DAMAA1 envoie au contrôleur DAMAC1 une requête RQ demandant l'allocation de certaines ressources. Le contrôleur DAMAC1 lui répond par un message d'allocation de ressources, BFTP (Burst Frequency Time Plan).

Le contrôleur d'allocation DAMAC1 maximise la charge des liens montants. Le sous-ensemble DCC1 du contrôleur de congestion minimise la congestion des mémoires tampons du commutateur embarqué (non représenté), en limitant (par exemple au moyen d'un classique contrôle de flux) l'arrivée de trafic au niveau de la couche MAC de la station UES1. Il contribue ainsi indirectement à moduler les requêtes d'allocations de ressources émises par l'agent DAMAA1, mais l'asynchronisme des fonctionnements respectifs du contrôleur d'allocation DAMAC1 et du sous-ensemble DCC1 du contrôleur de congestion a pour conséquence que la capacité des ressources allouées par le contrôleur d'allocation DAMAC1 ne correspond pas toujours à celle autorisée par le sous-ensemble DCC1 du contrôleur de congestion. Cette solution est donc peu efficace. Elle nécessite donc des mémoires tampons de forte capacité, dans le commutateur embarqué.

Un deuxième dispositif gestionnaire connu est illustré par la **figure 2**. Dans ce dispositif, le contrôleur de congestion comporte un seul sous-ensemble qui est lé sous-ensemble DCC2 dans l'entité centrale OBMC2 située à bord du satellite, la station utilisatrice UES2 ne comportant plus de sous-ensemble SCC. Les requêtes RQ' de l'agent d'allocation DAMAA2 sont envoyées à la fois au contrôleur d'allocation DAMAC2 et au contrôleur de congestion DCC2. Le contrôleur d'allocation DAMAC2 envoie des messages d'allocation, BFTP, à l'agent DAMAA2. Le contrôleur de congestion DCC2 répond à l'agent DAMAA2 en lui indiquant un débit autorisé AR', ou un refus CO' lorsqu'il y a effectivement une congestion de la mémoire tampon pour la sortie visée. Les informations provenant du contrôleur de congestion DCC2 sont donc directement interprétées par l'agent DAMAA2, au niveau de la couche MAC de contrôle d'accès au médium, de la station utilisatrice UES2. Grâce à ces informations, l'agent DAMAA2 envoie des requêtes d'allocation RQ' qui sont modulées pour prendre en compte l'état de congestion de chaque lien descendant qu'il souhaite utiliser. Ceci permet de maximiser l'utilisation de chaque lien montant, contrairement à la solution décrite précédemment.

La **figure 3** illustre un troisième dispositif connu. Dans ce dispositif, comme dans le deuxième, la station utilisatrice UES3 ne comporte plus de sous-ensemble SCC du contrôleur de congestion. Les requêtes RQ" de l'agent d'allocation DAMAC3 sont envoyées seulement au contrôleur d'allocation DAMAC3, dans l'entité centrale OBMC3 située à bord du satellite. Le contrôleur d'allocation DAMAC3 envoie des messages d'allocation, BFTP, à l'agent DAMAA3. Le contrôleur de congestion DCC3 envoie au contrôleur DAMAC3 un message lui indiquant un débit autorisé AR", ou un refus CO" lorsqu'il y a effectivement une congestion de la mémoire tampon pour la sortie visée. Ces messages sont directement interprétés par le contrôleur DAMAC3 qui en tient compte pour allouer des ressources à la station UES3. Ce dispositif connu procure un temps de réaction plus court que les deux dispositifs précédemment décrits, puisque l'action du contrôleur de congestion DCC3 ne subit pas le délais d'un aller-retour satellite-terre-satellite.

BAIOCCHI A ET AL: "DEFINITION AND PERFORMANCE ANALYSIS OF A SIMPLE, ABR-LIKE CONGESTION CONTROL SCHEME FOR SATELLITE ATM NETWORKS WITH GUARANTEED LOSS PERFORMANCE"; IEEE JOURNAL ON SELECTED AREAS IN COMMUNICATIONS, IEEE INC. NEW YORK, US, vol. 17, no. 2, février 1999, pages 303-313, XP000851763 décrit une architecture pour gérer la congestion des ressources d'un satellite.

Pour le deuxième dispositif connu on peut utiliser alternativement deux types d'algorithme de contrôle de congestion, qui sont dits « à débit disponible » :
- Un algorithme appelé « indication explicite de débit pour éviter une congestion », ou ERICA (Explicit Rate Indication for Congestion Avoidance). Il commande le débit connexion par connexion, au moyen de paquets de données dédiés pour transmettre des requêtes ou des indications.
- Un algorithme appelé «allocation diffusée pour la commande de débit» ou BRCA (Broadcast Rate Control Allocation), qui est une variante simplifiée du précédent, et dans lequel le contrôle de congestion est fait au niveau d'un couple lien-montant/lien-descendant, au lieu d'être fait connexion par connexion.

L'algorithme ERICA est applicable seulement au premier et au deuxième dispositif connus (figures 1 et 2).

Le deuxième et le troisième dispositifs sont meilleurs que le premier mais souffrent néanmoins de plusieurs défauts :
- Une grande complexité (nécessité de surveiller en continu l'état de remplissage des mémoires tampons du commutateur embarqué pour détecter une congestion).
- Une taille de mémoire tampon au moins moyenne, parce que le contrôle de congestion ne peut réagir qu'après avoir effectivement constaté un début de congestion.
- Le traitement connexion par connexion de l'algorithme ERICA provoque une charge de signalisation (paquets dédiés) importante qui s'ajoute à la charge de signalisation engendrée par le contrôleur d'allocation DAMAC.
- Le traitement par couple lien-montant/lien-descendant de l'algorithme BRCA ne permet pas un partage équitable des ressources, station utilisatrice par station utilisatrice, parce qu'il ne prend pas en compte leurs besoins spécifiques.
- Leurs implémentations respectives ne peuvent être faites qu'à bord du satellite, parce qu'elles nécessitent de surveiller l'état de remplissage des mémoires tampon, et pour obtenir un temps de réaction plus court.

De plus, dans l'implémentation du premier et deuxième dispositif (selon l'algorithme ERICA), seuls les trafics de type ABR (Available Bit Rate) sont soumis au contrôle de congestion. Tous les autres trafics, mêmes non temps-réel et en rafales, sont exemptés du contrôle de congestion (par exemple des trafics ATM de type VBR-nRT (Variable Bit Rate, Non Real Time), GFR (Guaranteed Frame Rate), UBR (Unspecified Bit Rate).

Cela créé de fortes contraintes sur la taille des mémoires tampons nécessaires dans le commutateur embarqué :
- Par exemple, pour réduire la bande passante équivalente (calculée par le contrôleur d'admission des connexions, et représentative de la bande passante à réserver sur le lien descendant considéré) d'une connexion VBR-nRT, il faut une mémoire de capacité moyenne, dédiée au trafic VBR-nRT, pour chaque sortie.
- Par exemple, pour absorber l'arrivée incontrôlée de rafales GFR ou UBR, il faut une mémoire de capacité importante, dédiée à ces trafics, pour chaque sortie.

Le but de l'invention est de proposer un dispositif gestionnaire qui n'ait pas ces inconvénients des dispositifs gestionnaires connus.

L'objet de l'invention est un dispositif gestionnaire de ressources pour un système de télécommunication par satellite, ce système comportant une pluralité de stations utilisatrices et au moins un satellite ; ce dispositif gestionnaire comportant un dispositif de contrôle de congestion, qui alloue des ressources sur des liens montants ;
caractérisé en ce qu'il comporte, pour chaque satellite, une entité centrale qui comporte :
- un sous-ensemble du dispositif de contrôle de congestion, ce sous-ensemble comportant des moyens pour :
   -- recevoir des requêtes émises par des stations utilisatrices du satellite considéré, chaque requête exprimant le débit nécessaire à un groupe de connexions supportées par une station utilisatrice et par un même lien descendant du satellite considéré,
   -- et déterminer le débit autorisé pour un tel groupe de connexions ;
- et un sous-ensemble du dispositif d'allocation de ressources à la demande, comportant des moyens pour allouer des ressources sur un lien montant, à chaque station utilisatrice, en fonction des débits autorisés par le sous-ensemble du dispositif de contrôle de congestion, et de manière globale pour l'ensemble des connexions supportées par cette station utilisatrice.

Ce dispositif de gestion permet d'utiliser des mémoires tampons de plus petite taille parce qu'il réagit préventivement au risque de congestion, c'est à dire bien avant le début d'une congestion, grâce au fait que le contrôleur de congestion reçoit lui-même les requêtes d'allocation de débit au lieu de laisser le contrôleur DAMA recevoir ces requête, et d'attendre passivement qu'une congestion se manifeste, et alors réagir à une congestion qui a déjà commencé.

Ce dispositif gestionnaire est compatible avec tous les types connus d'algorithme de type DAMA. Sa réalisation est plus simple que celle des dispositifs gestionnaires connus, et il peut être éventuellement installé entièrement au sol, parce qu'il ne nécessite pas de surveiller le remplissage des mémoires tampons du commutateur embarqué à bord du satellite.

Il peut être utilisé pour tous les types de trafic non-temps réel, prédictibles ou non prédictibles, notamment ABR,GFR,UBR, y compris les trafics VBRnRT.

Selon un mode de réalisation préférentiel, pour chaque station utilisatrice, le sous-ensemble du dispositif d'allocation de ressources à la demande, situé dans l'entité centrale, comporte des moyens pour :
- recevoir une requête d'allocation de débit supplémentaire, émise par une station utilisatrice lorsqu'elle détecte le dépassement d'un seuil de remplissage d'une mémoire tampon destinée au trafic à débit variable non temps réel, alors qu'un débit minimal lui a été alloué ;
- envoyer à cette station des message d'allocation de débit autorisant un débit supérieur ;
- recevoir de cette station une requête indiquant que le remplissage a commencé à décroître et indiquant le niveau de ce remplissage ;
- déterminer par anticipation l'instant où ce remplissage sera nul ;
- en déduire un instant où il pourra envoyer à cette station un message d'allocation de débit allouant de nouveau le débit minimal, cet instant étant choisi tel ce que ce message arrive à cette station à un instant voisin de l'instant où ce remplissage sera nul.

Le dispositif gestionnaire ainsi caractérisé met en oeuvre un mécanisme d'allocation anticipée qui permet d'optimiser l'allocation des ressources pour le trafic non temps réel qui est bien caractérisé.

L'invention sera mieux comprise et d'autres caractéristiques apparaîtront à l'aide de la description ci-dessous et des figures l'accompagnant. Cette description concerne des cellules ATM et des types de service définis dans les normes ATM, mais le dispositif selon l'invention est utilisable pour tous les types de paquet.
- La figure 1 représente le schéma synoptique du premier dispositif connu qui est décrit ci-dessus.
- La figure 2 représente le schéma synoptique du deuxième dispositif connu qui est décrit ci-dessus.
- La figure 3 représente le schéma synoptique du troisième dispositif connu qui est décrit ci-dessus.
- La figure 4 représente le schéma synoptique d'un exemple de réalisation du dispositif selon l'invention, en ne faisant figurer que les moyens essentiels pour contrôler la congestion de manière préventive.
- La figure 5 représente un schéma synoptique plus détaillé de cet exemple de réalisation du dispositif selon l'invention, en faisant figurer en outre les moyens essentiels pour un protocole d'accès de type DAMA avec un mécanisme d'allocation anticipée pour certains trafics.
- La figure 6 représente le schéma synoptique d'un exemple de réalisation d'un agent DAMA dans l'exemple de station utilisatrice représenté sur les figures 4 et 5.
- La figure 7 représente un chronogramme illustrant le fonctionnement des moyens situés dans cet agent DAMA pour allouer des ressources sur un lien montant, de manière anticipée, pour le trafic à débit variable non temps réel (VBRnRT).

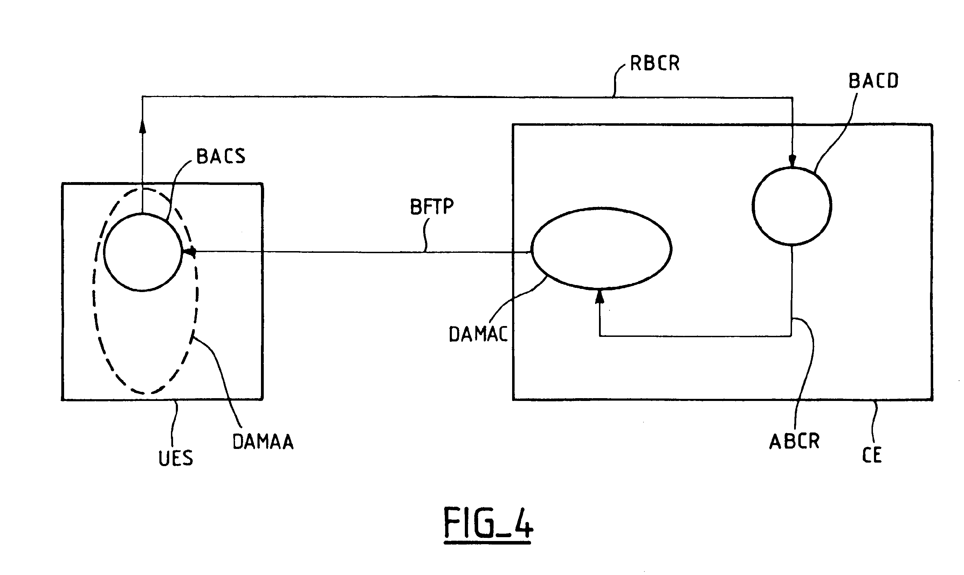

La **figure 4** représente un schéma synoptique d'un exemple de réalisation du dispositif selon l'invention, en ne faisant figurer que les moyens essentiels pour contrôler la congestion de manière préventive. Le dispositif gestionnaire comporte :
- une partie propre à chaque station utilisatrice UES, et située dans cette station,
- et une entité centrale CE commune à toutes les stations (c'est à dire commune pour tous les liens reliant un satellite donné à des stations utilisatrices), ou commune à un sous-ensemble de stations (fournisseurs d'accès ou fournisseurs de réseau).

Selon une première variante de réalisation, l'entité centrale CE est située à bord du satellite. Selon une seconde variante, l'entité centrale CE est située au sol, par exemple dans l'une des stations utilisatrices, ou bien elle peut être répartie dans plusieurs stations de contrôle. Le principe de fonctionnement est alors inchangé. La variante située au sol a pour avantage d'alléger le satellite, mais a pour inconvénient de nécessiter des messages de signalisation supplémentaires entre le sol et le satellite.

Dans les deux variantes, les fonctions de contrôle d'appels et les fonctions d'admission d'appels CAC sont au sol dans un centre commun. Elles peuvent aussi être dispersées chez différents fournisseurs d'accès, s'il y en a plusieurs pour un même satellite.

Chaque station utilisatrice UES comporte un agent DAMA modifié selon l'invention, et référencé DAMAA, qui comporte un dispositif BACS qui est un premier sous-ensemble d'un dispositif appelé contrôleur d'admission de blocs. L'entité centrale CE comporte un contrôleur DAMA, référencé DAMAC, et un second sous-ensemble, référencé BACD, du contrôleur d'admission de blocs. Le contrôleur DAMAA et le client DAMAAC ont pour principale fonction de gérer les ressources des liens montants. Les deux sous-ensembles BACS et BACD du contrôleur d'admission de blocs ont pour fonction de gérer en outre les ressources des liens descendants, en évitant autant que possible des congestion sur les sorties du commutateur embarqué.

Le sous-ensemble BACS émet des requêtes d'allocation de débit, RBCR, représentant les besoins cumulés pour chaque lien descendant, pour cette station donnée UES, en fonction du trafic entrant dans cette station UES. Chaque requête d'allocation RBCR correspond donc à un groupe de connexions passant par cette station UES et par une même sortie du commutateur embarqué, et non à une connexion considérée individuellement, ni à un lien descendant considéré globalement.

Le sous-ensemble BACD reçoit les requêtes d'allocation de débit RBCR émises par chaque station UES. Ces requêtes sont directement utilisées par ce sous-ensemble BACD pour déterminer un débit autorisé pour chaque groupe de connexion, pour chaque sortie du commutateur embarqué, compte tenu du débit maximal permis respectivement sur chacune de ces sorties. Comme dans le troisième dispositif connu décrit ci-dessus, le sous-ensemble BACD est relié directement au contrôleur DAMAC. Mais cette liaison directe est utilisée pour lui indiquer un débit autorisé ABCR pour chaque groupe de connexion, pour chaque sortie du commutateur embarqué. Le contrôleur DAMAC en déduit le débit qu'il peut allouer à chaque groupe de connexions, pour chaque lien montant. Il envoie périodiquement un message BFTP d'allocation de temps et de fréquence à chaque station UES pour lui indiquer, pour chaque groupe de connexions, le débit alloué sur le lien montant qui la relie au satellite.

La liaison directe entre le sous-ensemble BACD et le contrôleur DAMAC rend le contrôle de congestion insensible aux délais de transmission entre l'entité centrale CE et les stations : Elle permet de moduler, sans délai, les débits alloués par le contrôleur DAMAC, donc avec la meilleure réactivité. D'autre part, le fait que les requêtes d'allocation de débit RBCR soient traitées par le sous-ensemble BACD pour moduler les débits qu'il autorise procure une adéquation de la gestion des ressources des liens montants et de la gestion des ressources des liens descendants, donc une meilleure efficacité de ces deux gestions.

Dans la station UES, l'agent DAMAA reçoit de l'entité centrale CE un message d'allocation de débit, BFTP, pour le lien montant utilisé par la station UES. L'allocation de ressources en temps et en fréquence sur un lien montant est calculée par le contrôleur DAMAC en fonction des débits autorisés par le sous-ensemble BACD. Ces débits autorisés sont déterminés en vue d'éviter des congestions, par conséquent l'allocation effective des ressources sur les liens montants prévient les congestions. Ce contrôle de congestion dynamique et préventif complète un contrôle de congestion statique qui est réalisé au moment de l'établissement de chaque connexion. Finalement il permet d'utiliser des mémoires tampons de plus petites capacités pour un taux de perte de paquets donné.

Distinguons maintenant les gestions des différents types de trafic :
-- Le trafic à haute priorité et le trafic en temps réels ne sont pas soumis au contrôle de congestion car il n'est pas question de rallonger leurs délais de transmission. Un contrôle préventif au niveau admission d'appels CAC suffit.
-- Le trafic non temps réel peut supporter un rallongement des délais de transmission, et il est assez bien caractérisé (au moyen d'une valeur de débit dit soutenable) quand il est prédictible, ce qui permet d'utiliser un mécanisme de contrôle anticipé de congestion au niveau du contrôle d'admission d'appels CAC, qui est décrit ci-dessous. On peut également lui appliquer le mécanisme de contrôle de congestion BAC.
-- Les trafics non temps réel et non prédictibles (ABR, UBR, GFR) peuvent supporter un rallongement des délais de transmission et sont donc soumis au contrôle de congestion, mais ils ne bénéficient pas du mécanisme de contrôle anticipé de congestion, parce qu'ils sont mal caractérisés.

Pour chaque lien descendant, les ressources sont allouées par le contrôleur d'admission de blocs, BACS-BACD, en les répartissant en trois parts :
- Une part des ressources est réservée de manière continue pour les trafics bien caractérisés, cette part n'est donc pas affectée par le contrôle de congestion exercé par le contrôleur BACD. Elle est déterminée lors de chaque établissement ou relâchement de connexion, et est égale à la somme des bandes équivalentes calculées par le dispositif d'admission de connexions, CAC, et nécessaires à la garantie des débits suivants :
   -- des débits de crête (PCR) des connexions temps réel,
   -- des débits soutenus (SCR) des connexions non temps réel, lorsque le mécanisme de contrôle de congestion, BAC, ne leur est pas appliqué ;
   -- et des débits minimaux (MCR) éventuellement garantis pour d'autres types de trafic (ABR, GFR, UBR, ...)
- Une part est la somme de tous les débits autorisés de manière dynamique par le contrôleur BACD.
- La part restante, si elle n'est pas nulle, est répartie équitablement par le contrôleur BACD entre les liens montants.

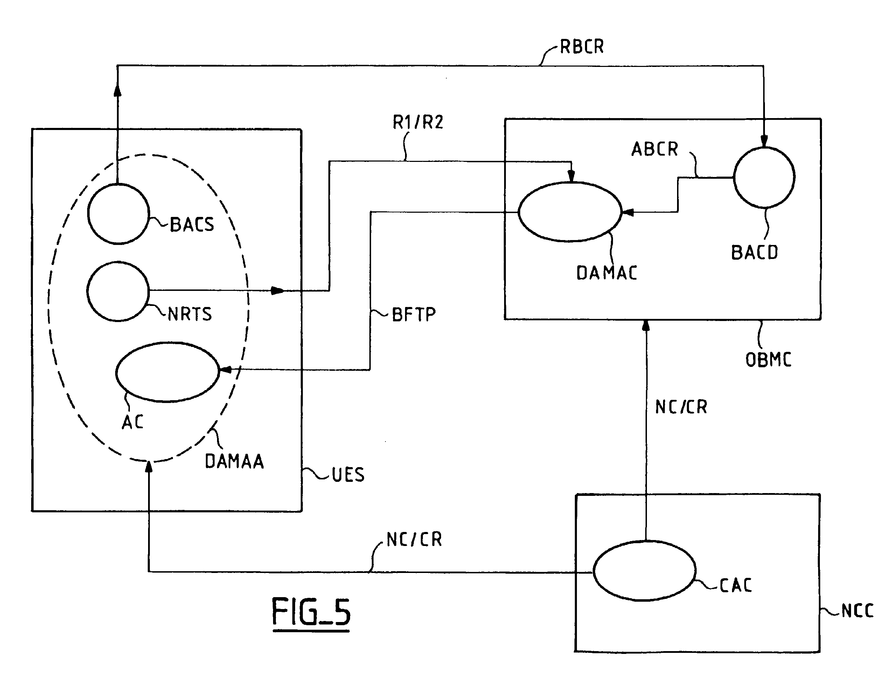

La **figure 5** représente un schéma synoptique plus détaillé de cet exemple de réalisation du dispositif selon l'invention. L'entité centrale est supposée être embarquée à bord du satellite, et est référencée OBMC (On Board Multimedia Controller). Par rapport à la figure 4, la figure 5 représente en plus, dans le schéma synoptique de l'agent DAMAA, un dispositif NRTS de signalisation dédié au trafic non temps réel, et un contrôleur AC d'accès au lien montant reliant la station utilisatrice UES au satellite. D'autre part, elle représente le contrôleur d'admission d'appels, CAC, qui est situé au sol dans un centre référencé NCC (Comme indiqué ci-dessus, l'entité centrale pourrait être située au sol et intégrée à ce centre NCC dans d'autres exemples de réalisations).

Le contrôleur CAC informe le contrôleur d'accès AC de chaque station utilisatrice UES, et le sous-ensemble BACD (situé à bord du satellite dans cet exemple), par des messages référencés NC/CR, lors de chaque établissement et de chaque relâchement de connexion. Le dispositif de signalisation NRTS gére le trafic non temps réel en émettant des requêtes R1 d'allocation de débit, et en émettant des messages R2 de relâchement de débit lorsqu'un débit demandé par une précédente requête d'allocation de débit n'est plus justifié (C'est à dire à la fin d'une salve de paquets de données).

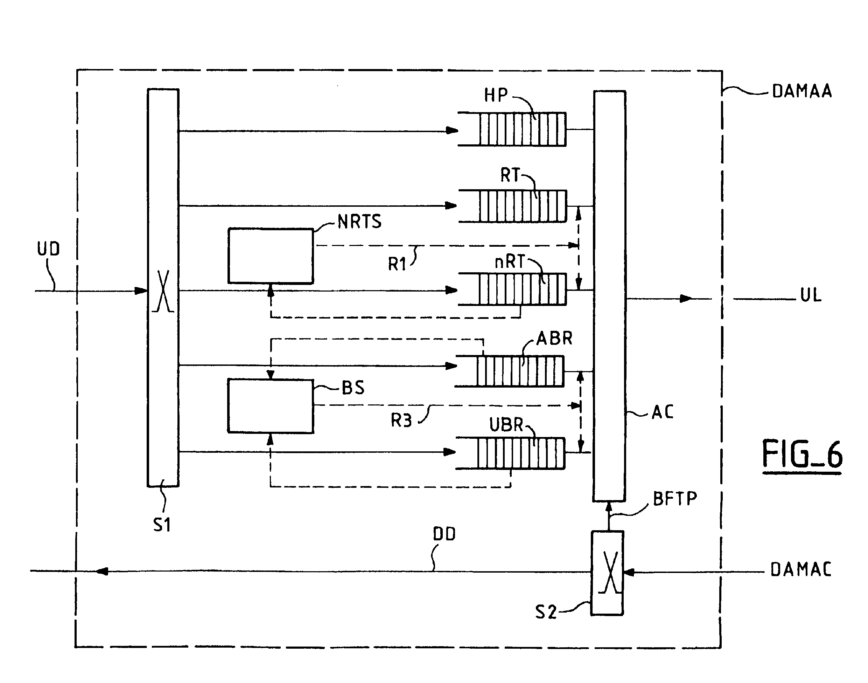

La **figure 6** représente un schéma synoptique plus détaillé de l'agent DAMAA dans l'exemple de station utilisatrice UES représenté sur les figures 4 et 5. L'agent DAMAA comporte :
- une mémoire HP de type premier-entré-premier-sorti pour stocker les cellules du trafic dit à haute priorité qui attendent d'être émises en direction du satellite ;
- une mémoire RT de type premier-entré-premier-sorti pour stocker les cellules du trafic dit en temps réel, qui attendent d'être émises en direction du satellite ;
- une mémoire nRT de type premier-entré-premier-sorti pour stocker les cellules du trafic dit non temps réel, qui attendent d'être émises en direction du satellite ;
- une mémoire ABR de type premier-entré-premier-sorti pour stocker les cellules du trafic dit selon débit disponible (Trafic fourni par une source dont le débit est modulable à chaque instant par le réseau de transmission en fonction des ressources disponibles) qui attendent d'être émises en direction du satellite ;
- une mémoire UBR de type premier-entré-premier-sorti pour stocker les cellules du trafic dit à débit non spécifié (Trafic à transmettre au mieux en fonction des ressources restant disponibles) qui attendent d'être émises en direction du satellite ;
- un commutateur S1 qui reçoit les cellules montantes et les réparties dans les mémoires HP, RT, nRT, ABR, UBR, selon le type de trafic auquel elles appartiennent respectivement ;
- le contrôleur d'accès AC qui lit les cellules montantes dans les mémoires HP, RT, nRT, ABR, UBR, selon un ordre de priorités décroissantes fixé (HP, RT, nRT, ABR, UBR), et en fonction des allocations de débit contenus dans les messages BFTP envoyés par le contrôleur DAMAC, puis les multiplexe en temps et en fréquence sur le lien montant UL ;
- un commutateur S2 reçoit des cellules descendantes, et il extrait d'une part les messages BFTP qui sont fournis au contrôleur d'accès AC, et d'autre part la charge utile DD qui est envoyé vers un réseau de transmission terrestre ;
- le dispositif NRTS de signalisation dédié au trafic non temps réel, surveille le niveau de remplissage de la mémoire NRT, et il envoie un message de signalisation R1 requérant un débit fonction du niveau de remplissage, ce message étant acheminé via le contrôleur d'accès AC ;
- un dispositif BS de signalisation dédié au trafic non temps réel et non prédictif (trafic selon débit disponible, et trafic à débit non spécifié), qui surveille le niveau de remplissage des mémoires UBR et ABR, et qui envoie un message de signalisation R3 requérant un débit fonction de ces niveaux de remplissage, ce message étant acheminé via le contrôleur d'accès AC.

Selon un mode de réalisation préféré du dispositif selon l'invention, l'allocation des ressources sur un lien montant est réalisée de manière anticipée, pour le trafic à débit variable non temps réel , en exploitant le fait que ce trafic est bien caractérisé.

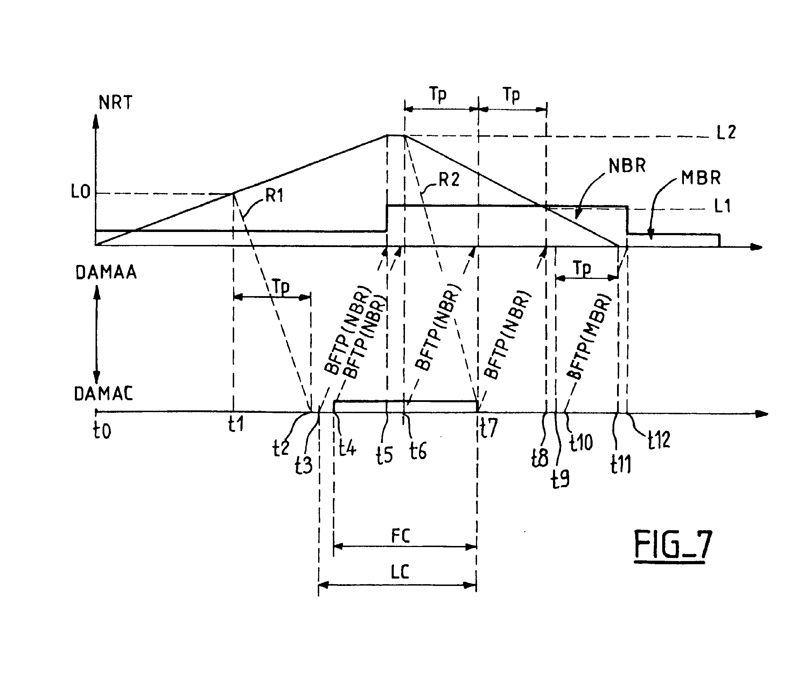

La **figure 7** représente un chronogramme illustrant le fonctionnement de ces moyens pour allouer des ressources sur un lien montant, de manière anticipée, pour le trafic à débit variable non temps réel. La partie supérieure représente le niveau de remplissage de la mémoire NRT de l'agent DAMAA, et le débit de transmission des données qui sont lues dans cette mémoire, alors que la partie inférieure représente la séquence des échanges de messages entre les sous-ensembles DAMAA et DAMAC, en fonction du temps. Pour plus de clarté, les messages BFTP ne sont pas tous représentés. Ils sont en fait émis périodiquement par le contrôleur DAMAC.

A partir de l'instant t0, la station UES reçoit une rafale de cellules à transmettre. A cet instant t0, le débit alloué a une valeur MBR qui est la valeur minimale pour ce lien montant considéré, et qui est inférieure au débit de cette rafale.

A l'instant t1, le niveau de remplissage de la mémoire NRT dépasse un seuil fixé L0 parce qu'elle reçoit plus de cellules qu'elle n'en restitue. Le dispositif de signalisation NRTS émet alors une requête R1 qui ne contient pas d'information de débit précise mais qui signale un besoin de débit supplémentaire. Cette requête peut être incluse dans l'en-tête d'une cellule de données, ou dans une cellule de signalisation du protocole DAMA. Le délais de transmission Tp n'étant pas négligeable, le seuil L0 est défini de manière que la capacité disponible de la mémoire NRT ne sera pas saturée pendant le délais 2Tp d'aller-retour, si la rafale continue.

A l'instant t2, la requête R1 parvient au contrôleur DAMAC, situé à bord du satellite dans cet exemple.

A l'instant t3, le contrôleur DAMAC émet un message BFTP(NBR) allouant un nouveau débit NBR, supérieur au débit NBR, l'augmentation de débit autorisée étant égale à la différence entre la valeur crête et la valeur soutenable, prévue pour la connexion non temps réel ayant la valeur crête la plus élevée pour la station UES considérée. Le contrôleur DAMAC émettra périodiquement un même message BFTP(NBR) allouant le même débit NBR, jusqu'à ce qu'il reçoive une requête R2 demandant une réduction de débit, provenant de l'agent DAMAA de la station utilisatrice.

A cet instant t3, le contrôleur DAMAC démarre un compteur LC qui va compter le nombre de fois où il alloue le nouveau débit NBR, autrement dit il détermine le temps écoulé depuis l'instant t3. Il va compter jusqu'à l'instant t6 où le contrôleur DAMAC reçoive une requête R2 demandant une réduction de débit. Si le temps de propagation Tp était nul, la mesure de ce temps écoulé permettrait au contrôleur DAMAC de connaître directement le nombres de cellules transmises avec le nouveau débit NBR. Mais à cause des délais de propagation, la transmission avec le nouveau débit NBR ne commence pas à l'instant t 3, mais à un instant t5 ; et elle ne finit pas lorsque le contrôleur DAMAC alloue de nouveau le débit MBR plus faible que le débit NBR. Connaissant le délai Tp, il sera possible d'en déduire le nombre de cellules qui ont été émises avec ce débit, à partir de l'instant t5 où la station UES aura reçu le premier message BFTP(NBR) allouant le nouveau débit NBR.

A l'instant t4, le contrôleur DAMAC émet un second message BFTP(NBR) allouant encore le nouveau débit NBR ; et il démarre un compteur FC. La détermination de t4 sera décrite plus loin, en relation avec l'instant t7.

Après l'instant t5, le débit de transmission augmentant, le remplissage se stabilise ou décroît lentement.

A l'instant t6, la rafale prend fin. L'agent DAMAA de la station utilisatrice constate la fin de la rafale. Il émet alors une requête R2 demandant une réduction du débit alloué, et indiquant le niveau de remplissage : L2.

A l'instant t7, le contrôleur DAMAC reçoit la requête R2. IL arrête les compteurs FC et LC, mais il continue d'émettre des message d'allocation BFTP(NBR) allouant le nouveau débit pendant une certaine durée afin de vider complètement, ou à peu prés complètement, la mémoire NRT. Pour déterminer cette durée, il calcule :
-- l'instant de la fin de rafale, t6=t7-Tp,
-- l'instant t8 =t7+Tp, où le message BFTP(NBR) émis à l'instant t7 atteindra la station utilisatrice,
-- le niveau de remplissage L1 qui sera atteint lorsque le message BFTP(NBR), émis à l'instant t7, atteindra la station utilisatrice, à l'instant t8.

On peut calculer ce niveau à partir de la connaissance de L2 et de ce qui a été alloué entre t7 et t7 moins la période d'anticipation qui est au maximum de 2Tp. Ainsi, dans l'exemple considéré, la période d'anticipation va de t4 = t7 - 2Tp à t7. Un compteur FC permet de connaître cette période d'anticipation, qui pourrait être inférieure à 2 Tp si deux messages de type R2 arrivaient au contrôleur DAMAC dans un intervalle de moins de 2 Tp. Ce compteur est remis à zéro chaque fois que le contrôleur DAMAC a fini de servir une rafale, ce qui permet de discerner plusieurs rafales non disjointes dans le temps, pour une station donnée.

Dans cet exemple, le niveau L1 calculé est inférieur à L0, mais il n'est pas négligeable. Connaissant ce niveau de remplissage L1, le contrôleur DAMAC en déduit qu'il faut maintenir le débit NBR jusqu'à un instant t11 pour vider complètement la mémoire. Il calcule t11 et en déduit l'instant t9=t11-Tp, à partir duquel il pourra envoyer un premier message BFTP(MBR) allouant de nouveau le débit MBR qui est inférieur au débit NBR, sachant qu'il doit respecter la périodicité d'envois des messages BFTP. En attendant l'instant t9, il continue à envoyer périodiquement des messages BFTP(NBR) allouant le débit NBR. Dés que l'instant t9 est atteint, il attend le prochain instant, t10, où il doit émettre un message BFTP et émet alors un premier message BFTP(MBR). Ce message arrive à cette station à un instant t12 postérieur à t11 où ce remplissage est nul, mais voisin de l'instant t11.

## Revendications

1. Dispositif gestionnaire de ressources pour un système de télécommunication par satellite, ce système comportant une pluralité de stations utilisatrices (UES) et au moins un satellite ; ce dispositif gestionnaire comportant un dispositif de contrôle de congestion, qui alloue des ressources sur des liens montants;
**caractérisé en ce qu'**il comporte, pour chaque satellite, une entité centrale (CE ; OBMC) qui comporte :
- un sous-ensemble (BACD) du dispositif de contrôle de congestion, ce sous-ensemble comportant des moyens pour :
-- recevoir des requêtes (RBCR) émises par des stations utilisatrices (UES) du satellite considéré, chaque requête exprimant le débit nécessaire à un groupe de connexions supportées par une station utilisatrice et par un même lien descendant du satellite considéré,
-- et déterminer le débit autorisé pour un tel groupe de connexions ;
- et un sous-ensemble (DAMAC) du dispositif d'allocation de ressources à la demande, comportant des moyens pour allouer des ressources sur un lien montant, à chaque station utilisatrice (UES), en fonction des débits autorisés par le sous-ensemble (BACD) du dispositif de contrôle de congestion, et de manière globale pour l'ensemble des connexions supportées par cette station utilisatrice.

2. Dispositif gestionnaire selon la revendication 1, **caractérisé en ce que**, pour chaque station utilisatrice (UES), le sous-ensemble (DAMAC) du dispositif d'allocation de ressources à la demande, situé dans l'entité centrale (CE ; OBMC), comporte des moyens pour :
- recevoir une requête (R1) d'allocation de débit supplémentaire, émise par une station utilisatrice (UES) lorsqu'elle détecte le dépassement d'un seuil de remplissage (L0) d'une mémoire tampon (NRT) destinée au trafic à débit variable non temps réel, alors qu'un débit minimal (MBR) lui a été alloué,
- envoyer à cette station des message d'allocation de débit (BFTP(NBR)) autorisant un débit supérieur ;
- recevoir de cette station une requête (R2) indiquant que le remplissage a commencé à décroître et indiquant le niveau (L2) de ce remplissage ;
- déterminer par anticipation l'instant (t11) où ce remplissage sera nul ;
- en déduire un instant (t9) où il pourra envoyer à cette station un message d'allocation de débit (BFTP(MBR)) allouant de nouveau le débit minimal, cet instant étant choisi tel ce que ce message arrive à cette station à un instant (t12) voisin de l'instant (t11) où ce remplissage sera nul.

3. Dispositif gestionnaire selon la revendication 1, **caractérisé en ce que**, pour chaque station utilisatrice (UES), le sous-ensemble (BACD) du dispositif d'allocation de ressources à la demande, situé dans l'entité centrale (OBMC), comporte des moyens pour allouer, à la demande, les ressources sur les liens descendants, de telle manière que la somme des débits alloués aux différentes connexions supportées par un même lien descendant soit toujours inférieure au débit maximal permis par ce lien, en vue d'éviter une congestion sur les liens descendants.

## Claims

1. A resource management device for a satellite telecommunication system, said system comprising a plurality of user stations (UES) and at least one satellite, said management device comprising a device for controlling congestion that assigns resources to links,
**characterised in that** it comprises, for each satellite, a central entity (CE; OBMC) that comprises:
- a sub-assembly (BACD) of said device for controlling congestion, said sub-assembly comprising means:
-- for receiving requests (RBCR) emitted by user stations (UES) of the considered satellite, each request expressing the flow required for a group of connections supported by a user station and by a same downlink of said considered satellite;
-- for determining the flow authorised for such a group of connections;
- and a sub-assembly (DAMAC) of a device for assigning resources on request, comprising means for assigning resources to an uplink, on each user station (UES), as a function of the flow authorised by the sub-assembly (BACD) of the device for controlling congestion, and globally for all of the connections supported by said user station.

2. The management device according to claim 1, **characterised in that**, for each user station (UES), the sub-assembly (DAMAC) of said device for assigning resources on request, located in the central entity (CE; OBMC), comprises means for:
- receiving a request (R1) for assigning additional flow, emitted by a user station (UES) when it detects that a filling threshold (L0) has been exceeded of a buffer memory (NRT) that is destined for variable flow non real-time traffic, when it had been assigned a minimum flow (MBR);
- sending flow assignment messages (BFTP(NBR)) to said station authorising a higher flow;
- receiving a request (R2) from said station indicating that filling has started to decrease and indicating the level (L2) of this filling;
- determining, by anticipation, the time (t11) at which said filling will be zero;
- deducing therefrom a time (t9) when it can send a flow assignment message (BFTP(MBR)) to said station re-assigning the minimum flow, said time being selected so that said message reaches said station at a time (t12) close to the time (t11) when said filling will be zero.

3. The management device according to claim 1, **characterised in that**, for each user station (UES), the sub-assembly (BACD) of the device for assigning resources on request, located in the central entity (OBMC), comprises means for assigning on request the resources to the downlinks so that the sum of the flow assigned to the various connections supported by the same downlink is always less than the maximum flow permitted by said link, so as to prevent congestion on the downlinks.

## Patentansprüche

1. Vorrichtung zum Verwalten von Betriebsmitteln für ein Satelliten-Telekommunikationssystem, wobei das System mehrere Benutzerstationen (UES) und wenigstens einen Satelliten hat; wobei die Verwaltungsvorrichtung eine Überlastungskontrollvorrichtung umfasst, die auf den Link-Strecken Betriebsmittel zuweist;
**dadurch gekennzeichnet, dass** sie für jeden Satelliten eine Zentralentität (CE; OBMC) umfasst, die Folgendes umfasst:
- eine Untereinheit (BACD) der Überlastungskontrollvorrichtung, wobei diese Untereinheit Mittel umfasst zum:
-- Empfangen von Anforderungen (RBCR), die von Benutzerstationen (UES) des betrachteten Satelliten ausgesendet werden, wobei jede Anforderung die benötigte Bitrate für eine Gruppe von Verbindungen angibt, die von einer Benutzerstation und von einer gleichen Downlink-Strecke des betrachteten Satelliten unterstützt werden,
-- und Ermitteln der Bitrate, die für eine solche Gruppe von Verbindungen autorisiert ist;
- und eine Untereinheit (DAMAC) einer Vorrichtung zum bedarfsabhängigen Zuweisen von Betriebsmitteln, die Mittel zum Zuweisen der Betriebsmittel auf einer Uplink-Strecke zu jeder Benutzerstation (UES) in Abhängigkeit von den von der Untereinheit (BACD) der Überlastungskontrollvorrichtung autorisierten Bitraten und global für die Gesamtheit der von dieser Benutzerstation unterstützten Verbindungen umfasst.

2. Verwaltungsvorrichtung nach Anspruch 1, **dadurch gekennzeichnet, dass** die Untereinheit (DAMAC) der in der Zentralentität (CE; OBMC) befindlichen bedarfsabhängigen Betriebsmittelzuweisungsvorrichtung für jede Benutzerstation (UES) Mittel umfasst zum:
- Empfangen einer von einer Benutzerstation (UES) ausgesendeten Anforderung (R1) zum Zuweisen einer zusätzlichen Bitrate, wenn sie das Übersteigen eines Füllstandsschwellenwertes (L0) eines Pufferspeichers (NRT) für Verkehr mit variabler Bitrate in Nicht-Echtzeit erfasst, wenn ihr nur eine minimale Bitrate (MBR) zugewiesen wurde,
- Senden von Bitratenzuweisungsnachlichten (BFTP(NBR)) zu dieser Station, die eine höhere Bitrate autorisieren;
- Empfangen einer Anforderung (R2) von dieser Station, die anzeigt, dass der Füllstand zu steigen begonnen hat, und die das Niveau (L2) dieses Füllstands anzeigt;
- vorausschauendes Ermitteln des Zeitpunkts (t11), an dem dieser Füllstand auf Null sein wird;
- Ableiten eines Zeitpunkts (t9) davon, an dem er eine Bitratenzuweisungsnachricht (BFTP(MBR)) zu dieser Station senden kann, die erneut die minimale Bitrate zuweist, wobei dieser Zeitpunkt so gewählt wird, dass diese Nachricht zu einem Zeitpunkt (t12) neben dem Zeitpunkt (t11) an dieser Station ankommt, an dem dieser Füllstand Null sein wird.

3. Verwaltungsvorrichtung nach Anspruch 1, **dadurch gekennzeichnet, dass** für jede Benutzerstation (UES) die in der Zentralentität (OBMC) befindliche Untereinheit (BACD) der bedarfsabhängigen Betriebsmittelzuweisungsstation Mittel umfasst, um nach Bedarf die Betriebsmittel auf den Downlink-Strecken auf eine solche Weise zuzuweisen, dass die Summe der den verschiedenen Verbindungen zugewiesenen Bitrate, die von derselben Downlink-Strecke unterstützt werden, immer kleiner ist als die maximale von dieser Strecke zugelassene Bitrate, um Überlastungen auf den Downlink-Strecken zu vermeiden.
